# EUROPÄISCHE PATENTANMELDUNG

(11) **EP 3 219 479 A1**
(43) Veröffentlichungstag der Anmeldung: **20.09.2017**
(21) Anmeldenummer: 17159763.6
(22) Anmeldetag: 08.03.2017
(51) Int. Cl.: B29D 30/06

(54) **MATRIZE FÜR EINE REIFENFORM, REIFENFORM UND VERFAHREN ZUR HERSTELLUNG**

(30) Priorität: 17.03.2016 DE 102016204416
(71) Anmelder: Herbert Maschinenbau GmbH & Co. KG, 36088 Hünfeld (DE)
(72) Erfinder: GROSCH, Martin, 36088 Hünfeld (DE)
(74) Vertreter: advotec.

(57) **Zusammenfassung**

Die Erfindung betrifft eine Matrize (10) für eine Reifenform, eine Reifenform und ein Verfahren zur Herstellung einer Reifenform zum Vulkanisieren von Reifenrohlingen, wobei die Matrize eine Negativform einer profilierten Lauffläche eines Reifens ausbildet, wobei die Matrize eine Formschale mit daran angeordneten Lamellenblechen (11) aufweist, wobei die Formschale eine Forminnenseite (15) und das Lamellenblech einen Steg (19) der Negativform ausbildet, wobei in der Formschale eine Mehrzahl von Schlitzen (13) ausgebildet ist, wobei in einen Schlitz ein Lamellenblech eingesetzt und an der Formschale befestigt ist, wobei das Lamellenblech an der Formschale formschlüssig befestigt ist, wobei der Schlitz eine Formwandung (21) der Formschale durchdringt und von der Forminnenseite zu einer Formrückseite (16) der Formschale verläuft.

## Beschreibung

Die Erfindung betrifft eine Matrize für eine Reifenform, eine Reifenform und ein Verfahren zur Herstellung einer Reifenform zum Vulkanisieren von Reifenrohlingen, wobei die Matrize eine Negativform einer profilierten Lauffläche eines Reifens ausbildet, wobei die Matrize eine Formschale mit daran angeordneten Lamellenblechen aufweist, wobei die Formschale eine Forminnenseite und das Lamellenblech einen Steg der Negativform ausbildet, wobei in der Formschale eine Mehrzahl von Schlitzen ausgebildet ist, wobei in einen Schlitz ein Lamellenblech eingesetzt und an der Formschale befestigt ist.

Derartige Matrizen sind aus dem Stand der Technik hinreichend bekannt und dienen zum Auskleiden einer Reifenform, die zum Vulkanisieren von Reifenrohlingen verwendet wird. Um eine profilierte Lauffläche eines Reifens auszubilden, insbesondere feine Profilrillen der Lauffläche, werden dünne Lamellenbleche an einer Formschale der Matrize befestigt. Die Lamellenbleche bilden an einer Forminnenseite der Formschale jeweils einen Steg der Negativform aus. Da die Lamellenbleche zumindest dünner als 0,5 mm ausgebildet sind, lassen sie sich kaum durch spanende Bearbeitung der Formschale kostengünstig herstellen. Es ist daher ebenfalls bekannt, in der Formschale eine Mehrzahl von Schlitzen auszubilden, innerhalb derer die Lamellenbleche jeweils befestigt werden. Eine Befestigung der Lamellenbleche in den jeweiligen Schlitzen erfolgt beispielsweise mittels eines Klebermaterials oder Verschweißen mit dem Material der Formschale. Wesentlich dabei ist, dass sich ein Lamellenblech nicht aus dem Schlitz lösen kann, wenn ein vulkanisierter Reifen aus der Reifenform entfernt wird. Beim Vulkanisieren wird ein Reifenrohling in die Reifenform eingelegt, wobei das Material der Lauffläche infolge von Temperatureinwirkung so weit plastifiziert wird, dass die Lamellenbleche in das Material der Lauffläche eindringen können, derart, dass die Negativform bzw. die Forminnenseite von dem Material der Lauffläche vollständig ausgefüllt bzw. bedeckt wird. Da dann in Zwischenräumen zwischen Lamellenblechen oder Profilrillen der Negativform Lufteinschlüsse entstehen, muss die Reifenform regelmäßig beim Vulkanisieren entlüftet werden. In der Reifenform bzw. der Forminnenseite sind dazu vergleichsweise dünne Bohrungen ausgebildet, über die Luft entweichen kann. Das Material der Lauffläche dringt zum Teil beim Vulkanisieren in diese Bohrungen ein, so dass bei einem fertig ausgebildeten und entformten Reifen auf der Lauffläche noch fadenähnliche Materialreste aus diesen Bohrungen sichtbar sein können.

Nachteilig bei den bekannten Matrizen ist, dass die Befestigung der Lamellenbleche an der Formschale sehr aufwendig ist und eventuell verschlissene oder beschädigte Lamellenbleche nur mit einem hohen Aufwand ausgewechselt werden können. Weiter ist es nachteilig, dass Bohrungen zur Entlüftung vorgesehen werden müssen, die verstopfen können und die dazu führen, dass an der Lauffläche unerwünschte Materialreste verbleiben.

Der vorliegenden Erfindung liegt daher die Aufgabe zugrunde, eine Matrize für eine Reifenform, eine Reifenform, ein Verfahren zur Entlüftung und ein Verfahren zur Herstellung einer Reifenform vorzuschlagen, die bzw. das eine kostengünstigere Herstellung eines Reifens ermöglicht.

Diese Aufgabe wird durch eine Matrize mit den Merkmalen des Anspruchs 1, eine Reifenform mit den Merkmalen des Anspruchs 17, ein Verfahren zur Entlüftung einer Reifenform mit den Merkmalen des Anspruchs 18 sowie ein Verfahren zur Herstellung einer Reifenform mit den Merkmalen des Anspruchs 19 gelöst.

Die erfindungsgemäße Matrize für eine Reifenform zum Vulkanisieren von Reifenrohlingen bildet eine Negativform einer profilierten Lauffläche eines Reifens aus, wobei die Matrize eine Formschale mit daran angeordneten Lamellenblechen aufweist, wobei die Formschale eine Forminnenseite und das Lamellenblech einen Steg der Negativform ausbildet, wobei in der Formschale eine Mehrzahl von Schlitzen ausgebildet ist, wobei in einen Schlitz ein Lamellenblech eingesetzt und an der Formschale befestigt ist, wobei das Lamellenblech an der Formschale formschlüssig befestigt ist, wobei der Schlitz eine Formwandung der Formschale durchdringt und von der Forminnenseite zu einer Formrückseite der Formschale verläuft.

Folglich sind die Lamellenbleche jeweils in einen zugehörigen Schlitz eingesetzt, wobei der Schlitz in der Formschale vorzugsweise orthogonal in der Formwandung verläuft, d.h. diese in radialer Richtung durchdringt. Eine Höhe des Lamellenblechs ist jeweils so ausgebildet, dass das Lamellenblech auf der Forminnenseite einen Steg ausbildet, der eine Lamelle in der Lauffläche des Reifens ausbilden kann, und so weit in den Schlitz eingesetzt ist, dass eine formschlüssige Befestigung des Lamellenblechs in dem Schlitz möglich ist. Dadurch, dass das Lamellenblech formschlüssig an der Formschale befestigt wird, wird es möglich, das Lamellenblech nicht nur einfach an der Formschale zu befestigen, sondern auch leicht auszuwechseln, da im Gegensatz zu anderen Verbindungstechniken, wie Kleben oder Schweißen, keine aufwendige Entfernung des Lamellenblechs mit einer Nachbearbeitung des Schlitzes erforderlich ist. Die Matrize ist dadurch besonders kostengünstig herzustellen und zu warten. Darüber hinaus ist es möglich, über den Schlitz, der die Formwandung durchdringt, die Reifenform zu entlüften. Dadurch, dass das Lamellenblech lediglich formschlüssig befestigt ist, wird der Schlitz nicht wie beim Kleben oder Schweißen, mit Material verfüllt und abgedichtet. Da Luft bereits sehr dünne Spalte überwinden kann, wird durch die alleinige formschlüssige Befestigung des Lamellenblechs im Schlitz die Möglichkeit eröffnet, die Reifenform über eventuell vorhandene Spalte zwischen Lamellenblech und Schlitz, welche im Rahmen der üblichen Fertigungstoleranzen liegen können, zu entlüften. Es ist daher nicht mehr erforderlich, Bohrungen zur Entlüftung in der Formschale auszubilden, wodurch die Reifenform bzw. Matrize kostengünstiger herstellbar wird. Auch können dann die sonst üblichen fadenförmigen Materialreste auf der Lauffläche des Reifens entfallen. Insgesamt werden Reifen dadurch kostengünstiger herstellbar.

Vorteilhaft ist es, wenn eine Schlitzbreite des Schlitzes und eine Blechdicke des Lamellenblechs so bemessen sind, dass ein Spaltkanal zwischen dem Lamellenblech und dem Schlitz ausgebildet werden kann. Über den Spaltkanal wird es dann möglich, die Reifenform zu entlüften. Eine Breite des Spaltkanals kann dabei besonders dünn sein, da über eine Länge des Spaltkanals entlang des Schlitzes dennoch ein besonders großer Querschnitt des Spaltkanals zur Entlüftung ausgebildet werden kann. Wenn der Spaltkanal besonders dünn ist, dringt auch kaum Material der Lauffläche beim Vulkanisieren in den Spaltkanal ein, weshalb Materialrückstände auf der Lauffläche wesentlich reduziert werden können.

Der Spaltkanal kann 0,01 mm bis 0,1 mm, vorzugsweise 0,03 mm bis 0,04 mm breit sein. Wie sich herausgestellt hat, ist bereits ein Spaltkanal mit dieser Breite ausreichend, um eine adäquate Entlüftung des Reifenprofils bzw. eines Profilabschnitts zwischen zwei Lamellenblechen beim Vulkanisieren eines Reifenrohlings zu gewährleisten.

Der Spaltkanal kann daher auch als ein Entlüftungskanal zur Entlüftung der Reifenform ausgebildet sein. Eine Ausleitung der überschüssigen Luft aus der Reifenform kann über gegebenenfalls weitere Kanäle auf der Formrückseite der Formschale erfolgen.

Das Lamellenblech kann auch zumindest abschnittsweise an der Forminnenseite anliegen. Beispielsweise kann das Lamellenblech bezogen auf dessen Längserstreckung an dessen äußeren Enden an der Forminnenseite anliegen. Dadurch ist sichergestellt, dass das Lamellenblech in der gewünschten Position relativ zur Forminnenseite an der Formschale positioniert ist. Das Lamellenblech bildet dann den Steg der Negativform mit einer definierten Höhe aus und kann auch nicht weiter in den Schlitz hineinrutschen.

Eine Länge des Lamellenblechs, bezogen auf eine Längserstreckung des Lamellenblechs, kann abschnittsweise größer als eine Länge des Schlitzes ausgebildet sein. Enden des Lamellenblechs können dann einen Anschlag bzw. eine Vorsprung ausbilden, der an der Forminnenseite anliegen kann.

Das Lamellenblech kann zwischen der Forminnenseite und der Formrückseite spielfrei verspannt oder vorgespannt sein. Wenn beispielsweise das Lamellenblech an der Forminnenseite anliegt, kann vorgesehen sein, dass die formschlüssige Fixierung des Lamellenblechs an der Formrückseite erfolgt. Ein Formschluss kann dabei so ausgebildet werden, dass das Lamellenblech spielfrei in radialer Richtung fixiert ist. Je nach Art der Fixierung bzw. Befestigung kann darüber hinaus eine Vorspannung des Lamellenblechs in dem Bereich des Lamellenblechs zwischen der Forminnenseite und der Formrückseite erfolgen.

Vorteilhaft kann das Lamellenblech einen Vorsprung ausbilden, der an der Formrückseite anliegt. Demnach kann das Lamellenblech so weit aus dem Schlitz auf der Formrückseite herausragen, dass der Vorsprung des Lamellenblechs das Lamellenblech formschlüssig in dem Schlitz fixiert.

Dabei kann der Vorsprung so an der Formrückseite anliegen, dass das Lamellenblech nicht mehr in Richtung der Forminnenseite aus dem Spalt herausgezogen werden kann.

Der Vorsprung kann durch Biegen des Lamellenblechs auf der Formrückseite ausgebildet sein, wobei der Vorsprung aus einer Schlitzebene heraustreten kann. Da die Schlitzebene zwangsläufig durch den Schlitz verläuft, wird es möglich, durch den Vorsprung, der dann aus der Schlitzebene heraustritt, ein Entfernen des Lamellenblechs aus dem Schlitz zu verhindern. Beispielsweise kann das Lamellenblech von der Forminnenseite her in den Schlitz eingesetzt werden, wobei dann eine formschlüssige Befestigung des Lamellenblechs durch Biegen des Lamellenblechs derart erfolgt, dass der Vorsprung ausgebildet wird. Dadurch entfallen aufwendige Arbeiten zur Befestigung des Lamellenblechs, wie beim Verkleben oder Verschweißen. Auch sind keine weiteren Befestigungsmittel mehr erforderlich, um das Lamellenblech formschlüssig zu fixieren, da dies ausschließlich mit dem Lamellenblech alleine erfolgt.

Der Vorsprung kann eine vom Lamellenblech ausgebildete Lasche sein, wobei die Lasche durch einen oder mehrere Trennschlitze im Lamellenblech ausgebildet sein kann. Wenn das Lamellenblech beispielsweise durch Stanzen ausgebildet wird, können die Trennschlitze besonders leicht hergestellt werden. In einer besonders einfachen Ausführungsform kann das Lamellenblech alleine über einen Trennschlitz verfügen, wobei der Trennschlitz dann so ausgebildet sein kann, dass zumindest eine Lasche an dem Lamellenblech ausgebildet wird. Die Lasche kann dann relativ zu dem Schlitz so gebogen werden, dass das Lamellenblech nicht mehr aus dem Schlitz entfernt werden kann. Andererseits kann das Lamellenblech dennoch aus dem Schlitz entfernt werden, wenn die Lasche wieder in ihre Ursprungsposition zurückgebogen wird. Dadurch wird eine besonders einfache Demontage des Lamellenblechs möglich.

Vorteilhaft kann vorgesehen sein, dass die Lasche um eine vertikale Achse gebogen ist. Unter einer vertikalen Achse wird hier eine radiale Achse, bezogen auf die Reifenform, verstanden.

Alternativ kann die Lasche um eine horizontale Achse gebogen sein. Unter einer horizontalen Achse wird hier eine axiale Achse, bezogen auf die Reifenform, verstanden.

Weiter kann auf der Formrückseite eine Aufnahmenut in der Formschale ausgebildet sein, in die der Schlitz mündet. Die Aufnahmenut kann so tief in der Formrückseite ausgebildet sein, dass das Lamellenblech nicht über die Aufnahmenut hinausragt. Dadurch kann eine vereinfachte formschlüssige Befestigung des Lamellenblechs erfolgen, beispielsweise dadurch, dass die Lasche nur innerhalb der Aufnahmenut gebogen werden kann. Eine Innenwand der Aufnahmenut kann dann einen Anschlag für die Lasche ausbilden. Auch wird die Matrize einfacher handhabbar, da die aus den Schlitzen auf der Formrückseite herausragenden Lamellenbleche nicht mehr beschädigt werden können und bei der Montage der Matrize an einem Formeinsatz nicht störend hervorragen.

Wenn das Lamellenblech symmetrisch ausgebildet ist, können beispielsweise an dem Lamellenblech mehrere, vorzugsweise zwei Laschen ausgebildet sein, die in entgegengesetzte Richtungen gebogen sind. Darüber hinaus wird das Lamellenblech dann noch einfacher herstellbar.

Das Lamellenblech kann innerhalb des Schlitzes zumindest abschnittsweise einen rundbogenförmigen oder wellenförmigen Querschnitt, bezogen auf die Formwandung, aufweisen. Das Lamellenblech kann dann in dem Schlitz in Art einer Blattfeder geklemmt werden. Eine formschlüssige Befestigung durch Biegen des Lamellenblechs wird dann noch einfacher möglich, da das Lamellenblech nicht ohne weiteres aus dem Schlitz herausfallen kann. Darüber hinaus kann dann stets die Ausbildung eines Spaltkanals sichergestellt werden.

Die Matrize kann aus einer Mehrzahl von Formschalen ausgebildet sein. Die Matrize wird dann kostengünstiger herstellbar, da insbesondere bei komplexen Profilierungen der Lauffläche kleinere Abschnitte der Matrize bearbeitet werden können. Eventuelle Fehler bei der Bearbeitung der Matrize bzw. der Formschale verursachen somit geringere Ausschusskosten.

Die erfindungsgemäße Reifenform zum Vulkanisieren von Reifenrohlingen weist eine Mehrzahl von Reifenformsegmenten auf, wobei das Reifenformsegment aus einer Segmentbasis und einem Formeinsatz ausgebildet ist, wobei der Formeinsatz zumindest eine erfindungsgemäße Matrize aufweist. So können große Reifenformsegmente einfach dadurch hergestellt werden, dass eine Mehrzahl von Formeinsätzen an der Segmentbasis befestigt werden. Ein Formeinsatz kann dann jeweils zumindest eine oder mehrere Matrizen aufweisen.

Bei dem erfindungsgemäßen Verfahren zur Entlüftung einer erfindungsgemäßen Reifenform wird die Reifenform über den Schlitz entlüftet. Zu den Vorteilen des erfindungsgemäßen Verfahrens wird auf die Vorteilsbeschreibung der erfindungsgemäßen Matrize verwiesen. Weitere vorteilhafte Ausführungsformen des Verfahrens zur Entlüftung ergeben sich aus den auf den Vorrichtungsanspruch 1 rückbezogenen Unteransprüchen.

Bei dem erfindungsgemäßen Verfahren zur Herstellung einer Reifenform zum Vulkanisieren von Reifenrohlingen wird von einer Matrize eine Negativform einer profilierten Lauffläche eines Reifens ausgebildet, wobei die Matrize eine Formschale aufweist, an der Lamellenbleche angeordnet werden, wobei von der Formschale eine Forminnenseite und von dem Lamellenblech ein Steg der Negativform ausgebildet wird, wobei in der Formschale eine Mehrzahl von Schlitzen ausgebildet wird, wobei in einen Schlitz ein Lamellenblech eingesetzt und an der Formschale befestigt wird, wobei das Lamellenblech an der Formschale formschlüssig befestigt wird, wobei der Schlitz eine Formwandung der Formschale durchdringt und von der Forminnenseite zu einer Formrückseite der Formschale verläuft. Zu den Vorteilen des erfindungsgemäßen Verfahrens wird auf die Vorteilsbeschreibung der erfindungsgemäßen Matrize verwiesen.

In einer Ausführungsform des Verfahrens kann die formschlüssige Verbindung mittels Umformen des Lamellenblechs auf der Formrückseite ausgebildet werden. Die Lamellenbleche werden dadurch insgesamt einfacher und kostengünstiger montierbar sowie auch demontierbar bzw. auswechselbar.

Weitere vorteilhafte Ausführungsformen des Verfahrens zur Herstellung einer Reifenform ergeben sich aus den auf den Vorrichtungsanspruch 1 rückbezogenen Unteransprüchen.

Nachfolgend werden bevorzugte Ausführungsformen der Erfindung unter Bezugnahme auf die beigefügten Zeichnungen näher erläutert.

Es zeigen
- **Fig. 1**: eine Teilschnittansicht einer Matrize nach einer ersten Ausführungsform entlang einer Linie I-I aus **Fig. 4**;
- **Fig. 2**: eine Unteransicht der Matrize;
- **Fig. 3**: eine Teilschnittansicht der Matrize entlang einer Linie III-III aus **Fig. 4**;
- **Fig. 4**: eine Draufsicht der Matrize;
- **Fig. 5**: eine Teilschnittansicht einer Matrize nach einer zweiten Ausführungsform;
- **Fig. 6**: eine Teilschnittansicht einer Matrize nach einer dritten Ausführungsform;
- **Fig. 7**: eine Teilschnittansicht einer Matrize nach einer vierten Ausführungsform;
- **Fig. 8**: eine Teilansicht eines Lamellenblechs nach einer fünften Ausführungsform;
- **Fig. 9**: eine Teilansicht eines Lamellenblechs nach einer sechsten Ausführungsform;
- **Fig. 10**: eine Teilansicht eines Lamellenblechs nach einer siebten Ausführungsform;
- **Fig. 11**: eine Teilansicht eines Lamellenblechs nach einer achten Ausführungsform;
- **Fig. 12**: eine Teilschnittansicht einer Matrize nach einer fünften Ausführungsform;
- **Fig. 13**: eine Teilschnittansicht einer Matrize nach einer sechsten Ausführungsform.

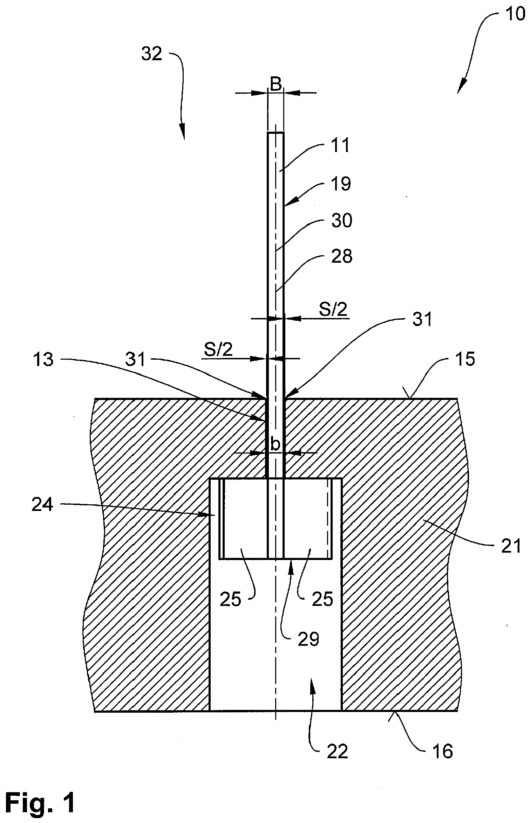

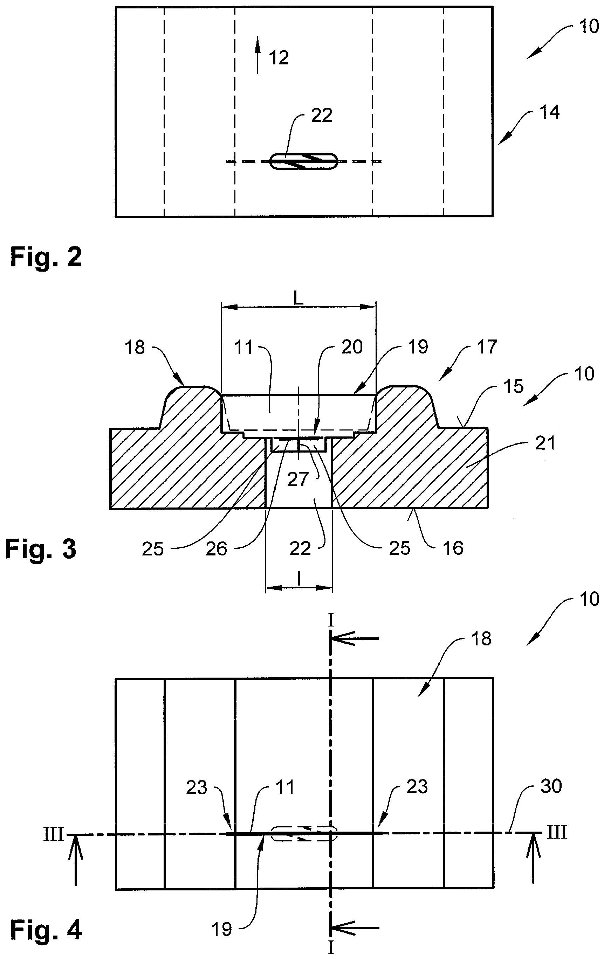

Eine Zusammenschau der **Fig. 1** bis **4** zeigt eine erste Ausführungsform einer Matrize 10 in schematischen Darstellungen. Die Matrize 10 weist eine Vielzahl von Lamellenblechen 11 auf, wovon hier nur eines dargestellt ist. Die Lamellenbleche 11 sind quer zu einer Laufrichtung 12 eines herzustellenden Reifens bzw. einer Lauffläche desselben in Schlitzen 13 angeordnet. Insbesondere ist der Schlitz 13 in einer Formschale 14 der Matrize 10, die hier nur abschnittsweise dargestellt ist, ausgebildet und verläuft von einer Forminnenseite 15 der Formschale 14 zu einer Formrückseite 16 der Formschale 14. Die Formschale 14 ist in einen hier nicht dargestellten Formeinsatz einer Reifenform einsetzbar und liegt mit der Formrückseite 16 an dem Formeinsatz an. Die Forminnenseite 15 bildet eine Negativform 17 für einen zu vulkanisierenden Reifenrohling aus, wobei auf der Forminnenseite 15 Profilrillenstege 18 ausgebildet sind. Das Lamellenblech 11 bildet ebenfalls einen Steg 19 der Negativform 17 aus.

Der Schlitz 13 ist aus einer Durchgangsöffnung 20 in einer Formwandung 21 der Formschale 14 ausgebildet und mündet in einer Nut 22 auf der Formrückseite 16. Weiter ist eine Länge L des Lamellenblechs 11 größer ausgebildet als eine Länge 1 des Schlitzes 13, so dass das Lamellenblech 11 mit Enden 23 auf der Forminnenseite 15 aufliegt. Ein Fortsatz 24 des Lamellenblechs 11 ragt in den Schlitz 13 hinein und tritt auf der Formrückseite 16 wieder aus diesem in die Nut 22 aus. Hier sind zwei Laschen 25, die um eine vertikale Achse 28 gebogen sind, durch Trennschlitze 26 und 27 ausgebildet, derart, dass Vorsprünge 29 ausgebildet werden, die aus einer Schlitzebene 30 heraustreten. Das Lamellenblech 11 kann so besonders einfach an der Formschale 14 montiert werden, da es lediglich in den Schlitz 13 eingesetzt wird, und nachfolgend zur formschlüssigen Befestigung des Lamellenblechs 11 die Laschen 25 aus der Schlitzebene 30 herausgebogen werden. Die Laschen 25 liegen insbesondere an der Formrückseite 16 an, so dass das Lamellenblech 11 nicht mehr aus dem Schlitz 13 herausgezogen werden kann und spielfrei zwischen der Forminnenseite 15 und der Formrückseite 16 verspannt ist.

Eine Blechdicke B des Lamellenblechs 11 ist so bemessen, dass ein Spaltkanal 31, der hier nicht näher zu ersehen ist, zwischen dem Lamellenblech 11 und dem Schlitz 13 ausgebildet ist. Der Schlitz 13 ist mit einer Schlitzbreite b > B ausgebildet, so dass der Spaltkanal 31 eine Spaltkanalbreite S = b - B aufweist. Der Spaltkanal 31 kann nun zur Entlüftung der Reifenform, insbesondere eines Profilabschnitts 32 benachbart dem Lamellenblech 11 beim Vulkanisieren von Reifenrohlingen dienen.

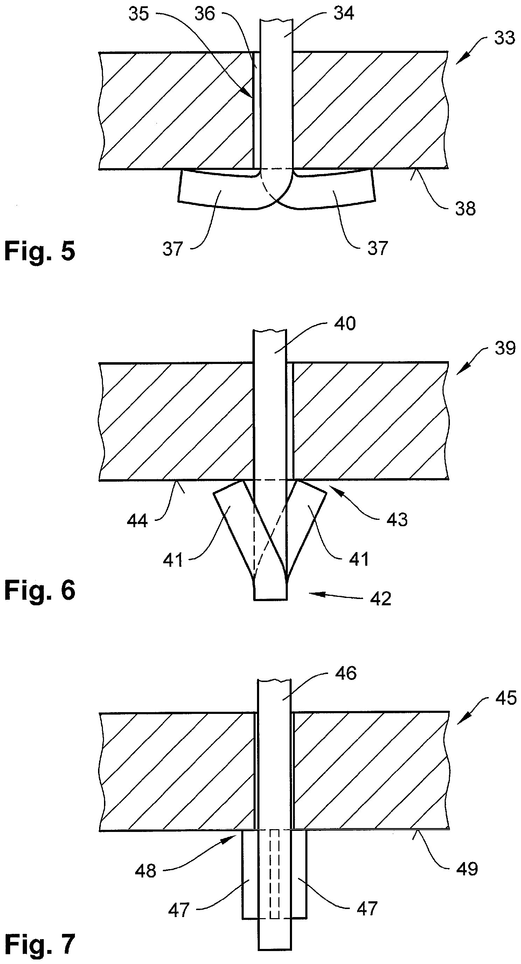

Die **Fig. 5** zeigt einen Teilschnitt einer Matrize 33 mit einem Lamellenblech 34, wobei das Lamellenblech 34 in einen Schlitz 35 unter Ausbildung eines Spaltkanals 36 eingesetzt ist. Laschen 37 des Lamellenblechs 34 sind hier jeweils in entgegengesetzte Richtungen um 90° gebogen, derart, dass die Laschen 37 an einer Formrückseite 38 im Wesentlichen flächig anliegen.

Die **Fig. 6** zeigt im Unterschied zur **Fig. 5** eine Matrize 39, bei der ein Lamellenblech 40 Laschen 41 aufweist, die an einem unteren Ende 42 des Lamellenblechs 40 V-förmig gebogen sind, so dass die Laschen 41 mit einer Oberkante 43 an einer Formrückseite 44 anliegen.

Die **Fig. 7** zeigt eine Matrize mit einem Lamellenblech 46, bei dem Laschen 47 in entgegengesetzte Richtungen durch Biegen so aufgeweitet sind, dass die mit einer Oberkante 48 an einer Formrückseite 49 anliegen.

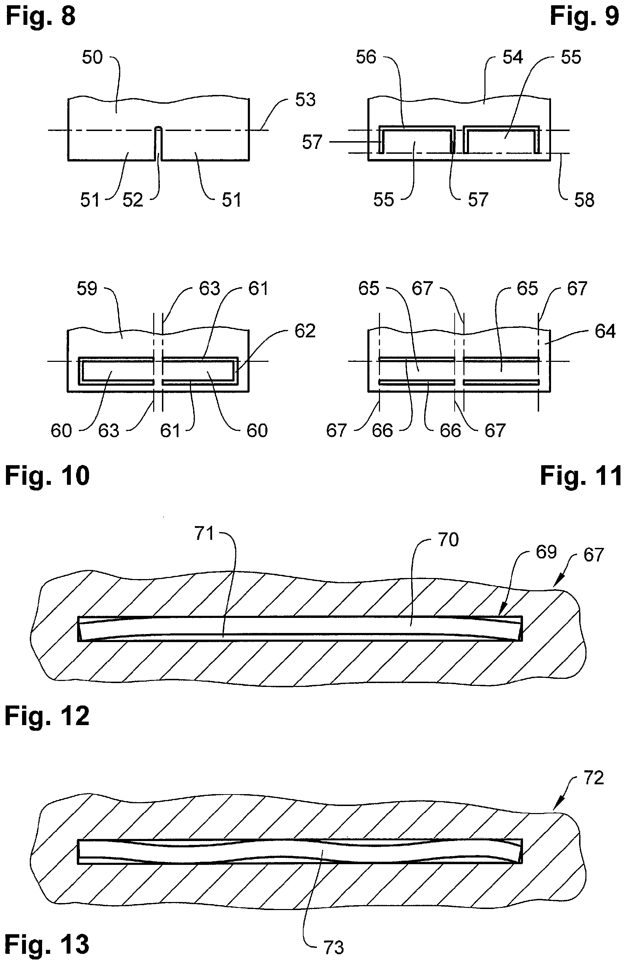

Die **Fig. 8** zeigt ein Lamellenblech 50 mit Laschen 51, die durch einen Trennschlitz 52 im Lamellenblech 50 ausgebildet sind. Die Laschen 51 können um eine horizontale Achse 53, jeweils in beliebige Richtungen, vorzugsweise in entgegengesetzte Richtungen, nach dem Einsetzen des Lamellenblechs 50 in einen hier nicht dargestellten Schlitz, gebogen werden.

Die **Fig. 9** zeigt ein Lamellenblech 54 mit Laschen 55, die durch jeweils einen horizontalen Trennschlitz 56 und zwei vertikale Trennschlitze 57 ausgebildet sind. Die Laschen 55 können um eine horizontale Achse 58 gebogen werden.

Die **Fig. 10** zeigt ein Lamellenblech 59 mit Laschen 60, die jeweils durch horizontale Trennschlitze 61 und einen vertikalen Trennschlitz 62 ausgebildet sind. Die Laschen 60 können jeweils um eine vertikale Achse 63 gebogen werden.

Die **Fig. 11** zeigt ein Lamellenblech 64 mit Laschen 65, die jeweils durch zwei parallele, horizontale Trennschlitze 66 ausgebildet sind. Die Laschen 65 können jeweils um zwei vertikale Achsen 67 gebogen bzw. aufgeweitet werden.

Die **Fig. 12** zeigt eine Teilschnittansicht einer Matrize 68 mit einem Schlitz 69 und einem Lamellenblech 70. Das Lamellenblech 70 ist insbesondere rundbogenförmig ausgebildet, so dass ein Spaltkanal 71 in dem Schlitz 69 beiderseits des Lamellenblechs 70 ausgebildet ist.

Die **Fig. 13** zeigt eine Matrize 72, bei der im Unterschied zu der in der **Fig. 12** gezeigten Matrize ein Lamellenblech 73 wellenförmig ausgebildet ist.

## Patentansprüche

1. Matrize (10, 33, 39, 45, 67, 72) für eine Reifenform zum Vulkanisieren von Reifenrohlingen, wobei die Matrize eine Negativform (17) einer profilierten Lauffläche eines Reifens ausbildet, wobei die Matrize eine Formschale (14) mit daran angeordneten Lamellenblechen (11, 34, 40, 46, 50, 54, 59, 64, 70, 73) aufweist, wobei die Formschale eine Forminnenseite (15) und das Lamellenblech einen Steg (19) der Negativform ausbildet, wobei in der Formschale eine Mehrzahl von Schlitzen (13, 35, 69) ausgebildet ist, wobei in einen Schlitz ein Lamellenblech eingesetzt und an der Formschale befestigt ist,
**dadurch gekennzeichnet,**
**dass** das Lamellenblech an der Formschale formschlüssig befestigt ist, wobei der Schlitz eine Formwandung (21) der Formschale durchdringt und von der Forminnenseite zu einer Formrückseite (16, 38, 44, 49) der Formschale verläuft.

2. Matrize nach Anspruch 1,
**dadurch gekennzeichnet,**
**dass** eine Schlitzbreite (b) des Schlitzes (13, 35, 69) und eine Blechdicke (B) des Lamellenblechs (11, 34, 40, 46, 50, 54, 59, 64, 70, 73) so bemessen sind, dass ein Spaltkanal (31, 36, 71) zwischen dem Lamellenblech und dem Schlitz ausgebildet ist.

3. Matrize nach Anspruch 2,
**dadurch gekennzeichnet,**
**dass** der Spaltkanal (31, 36, 71) 0,01 mm bis 0,1 mm, vorzugsweise 0,03 mm bis 0,04 mm breit ist.

4. Matrize nach Anspruch 2 oder 3,
**dadurch gekennzeichnet,**
**dass** der Spaltkanal (31, 36, 71) als ein Entlüftungskanal zur Entlüftung der Reifenform ausgebildet ist.

5. Matrize nach einem der vorangehenden Ansprüche,
**dadurch gekennzeichnet,**
**dass** das Lamellenblech (11, 34, 40, 46, 50, 54, 59, 64, 70, 73) zumindest abschnittsweise an der Forminnenseite (15) anliegt.

6. Matrize nach einem der vorangehenden Ansprüche,
**dadurch gekennzeichnet,**
**dass** eine Länge (L) des Lamellenblechs (11, 34, 40, 46, 50, 54, 59, 64, 70, 73) abschnittsweise größer als eine Länge (1) des Schlitzes (13, 35, 69) ausgebildet ist.

7. Matrize nach einem der vorangehenden Ansprüche,
**dadurch gekennzeichnet,**
**dass** das Lamellenblech (11, 34, 40, 46, 50, 54, 59, 64, 70, 73) zwischen der Forminnenseite (15) und der Formrückseite (16, 38, 44, 49) spielfrei verspannt oder vorgespannt ist.

8. Matrize nach einem der vorangehenden Ansprüche,
**dadurch gekennzeichnet,**
**dass** das Lamellenblech (11, 34, 40, 46, 50, 54, 59, 64, 70, 73) einen Vorsprung (29) ausbildet, der an der Formrückseite (16, 38, 44, 49) anliegt.

9. Matrize nach Anspruch 8,
**dadurch gekennzeichnet,**
**dass** der Vorsprung (29) durch Biegen des Lamellenblechs (11, 34, 40, 46, 50, 54, 59, 64, 70, 73) auf der Formrückseite (16, 38, 44, 49) ausgebildet ist, wobei der Vorsprung aus einer Schlitzebene (30) heraustritt.

10. Matrize nach Anspruch 8 oder 9,
**dadurch gekennzeichnet,**
**dass** der Vorsprung (29) eine vom Lamellenblech (11, 34, 40, 46, 50, 54, 59, 64, 70, 73) ausgebildete Lasche (25, 37, 41, 47, 51, 55, 60, 65) ist, wobei die Lasche durch einen oder mehrere Trennschlitze (26, 27, 52, 56, 57, 61, 62, 66) im Lamellenblech ausgebildet ist.

11. Matrize nach Anspruch 10,
**dadurch gekennzeichnet,**
**dass** die Lasche (25, 47, 60, 65) um eine vertikale Achse (28, 63, 67) gebogen ist.

12. Matrize nach Anspruch 10,
**dadurch gekennzeichnet,**
**dass** die Lasche (37, 41, 51, 55) um eine horizontale Achse (53, 58) gebogen ist.

13. Matrize nach einem der vorangehenden Ansprüche,
**dadurch gekennzeichnet,**
**dass** auf der Formrückseite (16, 38, 44, 49) eine Aufnahmenut (22) in der Formschale (14) ausgebildet ist, in die der Schlitz (13, 35, 69) mündet.

14. Matrize nach einem der vorangehenden Ansprüche,
**dadurch gekennzeichnet,**
**dass** das Lamellenblech (11, 34, 40, 46, 50, 54, 59, 64, 70, 73) symmetrisch ausgebildet ist.

15. Matrize nach einem der vorangehenden Ansprüche,
**dadurch gekennzeichnet,**
**dass** das Lamellenblech (11, 34, 40, 46, 50, 54, 59, 64, 70, 73) innerhalb des Schlitzes (13, 35, 69) zumindest abschnittsweise einen rundbogenförmigen oder wellenförmigen Querschnitt aufweist.

16. Matrize nach einem der vorangehenden Ansprüche,
**dadurch gekennzeichnet,**
**dass** die Matrize (10, 33, 39, 45, 67, 72) aus einer Mehrzahl von Formschalen (14) ausgebildet ist.

17. Reifenform zum Vulkanisieren von Reifenrohlingen, wobei die Reifenform eine Mehrzahl von Reifenformsegmenten aufweist, wobei das Reifenformsegment aus einer Segmentbasis und einem Formeinsatz ausgebildet ist,
**dadurch gekennzeichnet,**
**dass** der Formeinsatz zumindest eine Matrize (10, 33, 39, 45, 67, 72) nach einem der vorangehenden Ansprüche aufweist.

18. Verfahren zur Entlüftung einer Reifenform nach Anspruch 17,
**dadurch gekennzeichnet,**
**dass** die Reifenform über den Schlitz (13, 35, 69) entlüftet wird.

19. Verfahren zur Herstellung einer Reifenform zum Vulkanisieren von Reifenrohlingen, wobei von einer Matrize (10, 33, 39, 45, 67, 72) eine Negativform (17) einer profilierten Lauffläche eines Reifens ausgebildet wird, wobei die Matrize eine Formschale (14) aufweist, an der Lamellenbleche (11, 34, 40, 46, 50, 54, 59, 64, 70, 73) angeordnet werden, wobei von der Formschale eine Forminnenseite (15) und von dem Lamellenblech ein Steg (19) der Negativform ausgebildet wird, wobei in der Formschale eine Mehrzahl von Schlitzen (13, 35, 69) ausgebildet wird, wobei in einen Schlitz ein Lamellenblech eingesetzt und an der Formschale befestigt wird,
**dadurch gekennzeichnet,**
**dass** das Lamellenblech an der Formschale formschlüssig befestigt wird, wobei der Schlitz eine Formwandung (21) der Formschale durchdringt und von der Forminnenseite zu einer Formrückseite (16, 38, 44, 49) der Formschale verläuft.

20. Verfahren nach Anspruch 19,
**dadurch gekennzeichnet,**
**dass** die formschlüssige Verbindung mittels Umformen des Lamellenblechs (11, 34, 40, 46, 50, 54, 59, 64, 70, 73) auf der Formrückseite (16, 38, 44, 49) ausgebildet wird.
